# EUROPEAN PATENT APPLICATION

(11) **EP 3 355 206 A1**
(43) Date of publication of application: **01.08.2018**
(21) Application number: 17163330.8
(22) Date of filing: 28.03.2017
(51) Int. Cl.: G06F 17/30

(54) **A SYSTEM AND A METHOD FOR GENERATING PERSONALIZED PLAYLIST OF HIGHLIGHTS OF RECORDED MULTIMEDIA CONTENT**

(30) Priority: 27.01.2017 IN 201741003007
(71) Applicant: Wipro Limited, 560 035 Karnataka (IN)
(72) Inventor: NATARAJAN, Gowrishankar Subramaniam, 600126 Nookampalayam, (IN)
(74) Representative: Finnegan Europe LLP

(57) **Abstract**

Disclosed herein is a system and method for generating personalized playlist of highlights of plurality of recorded multimedia content. One or more recorded multimedia content is selected based on relative scores assigned to each of the plurality of recorded multimedia content based on predetermined configurable rules and profile information of the user. Highlights of each of the selected multimedia content are created based on predetermined configurable rules. Finally, each highlight is ordered based on the user profile for generating a personalized playlist of the highlights. The disclosed method automatically generates a highlight of the selected plurality of recorded multimedia content, thereby assisting the users in viewing the appropriate multimedia content as per their interests and convenience.

## Description

### Technical field

The present subject matter is related, in general to multimedia content management, and more particularly, but not exclusively to a system and a method for generating a personalized playlist of highlights of plurality of multimedia content recordings.

### Background

Currently, time shift viewing of videos, television series or any multimedia content plays a dominant role in the field of video entertainment. The viewers would like to watch these multimedia content according to their convenience and interests, on a device of their choosing. Hence, various time shifting and/or content recording techniques have been developed and put in practice to serve the viewers accordingly.

Time shifting techniques have become increasingly popular over the years and provide various time and place shift viewing features for viewers. Also, since both local and remote storage devices have become cheaper, viewers have leveraged their storage space to record and store multiple multimedia content. Some of the multimedia content recording techniques include recording on an embedded hard-disk within a media gateway or within a Set Top Box (STB) connected to a television, recording on a USB attached to a hard-disk or STB, and recording the content onto cloud storage associated with the viewer.

However, accessing a specific multimedia content recording, which reflects a viewer's preferences, mood, and taste at any point in time can be cumbersome and time consuming. Further, it is difficult for a viewer to preview a sample of an entire collection of multimedia content recordings before selecting required multimedia content recording for viewing. Hence, the viewers cannot make a quick decision on which multimedia content recording to view, in an easy and intuitive manner.

### Summary

Disclosed herein is a method for generating a personalized playlist of highlights of plurality of multimedia content recordings. The method comprises assigning, by a personalized playlist generator, a relative score to each of the plurality of multimedia content recordings based on one or more parameters associated with a user profile. Further, one or more multimedia content recordings is selected from the plurality of multimedia content recordings based on the relative score of each of the plurality of multimedia content recordings. Upon selecting the one or more multimedia content recordings, a highlight of each of the selected one or more multimedia content recordings is created based on predetermined configurable rules. Finally, the highlights of each of the selected one or more multimedia content recordings is ordered based on the user profile for generating a personalized playlist of the highlight of each of the selected one or more multimedia content recordings.

Further, the present disclosure discloses a personalized playlist generator for generating personalized playlist of highlights of plurality of multimedia content recordings. The personalized playlist generator comprises a processor and a memory. The memory is communicatively coupled to the processor, wherein the memory stores processor-executable instructions, which, on execution, causes the processor to assign a relative score to each of the plurality of multimedia content recordings based on one or more parameters associated with a user profile. Further, the processor selects one or more multimedia content recordings from the plurality of multimedia content recordings based on the relative score of each of the plurality of multimedia content recordings. Upon selecting the one or more multimedia content recordings, the processor creates highlight of each of the selected one or more multimedia content recordings based on predetermined configurable rules. Finally, the processor orders the highlight of each of the selected one or more multimedia content recordings based on the user profile for generating a personalized playlist of the highlight of each of the selected one or more multimedia content recordings.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief description of Drawings

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG**. **1** shows an exemplary environment for generating personalized playlist of highlights of plurality of multimedia content recordings in accordance with some embodiments of the present disclosure;
**FIG**. **2** shows a detailed block diagram illustrating a personalized playlist generator for generating personalized playlist of highlights of plurality of multimedia content recordings in accordance with some embodiments of the present disclosure;
**FIG**. **3** shows an exemplary illustration of generating personalized playlist of highlights of multimedia content recordings in accordance with few embodiments of the present disclosure;
**FIG**. **4** shows a flowchart illustrating a method for generating personalized playlist of highlights of multimedia content recordings in accordance with some embodiments of the present disclosure; and
**FIG**. **5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed description

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The present disclosure relates to a method and a personalized playlist generator for generating playlist of highlights of plurality of multimedia content recordings. The highlight of a selected one of the plurality of multimedia content recordings comprises a part and/or a combination of multiple parts of the multimedia content recordings corresponding to the selected one of the one or more multimedia content recordings. As an example, the highlight of a multimedia content recording 'M', which has a total playback time of 30 minutes, may be created by segmenting the multimedia content 'M' into 30 segments, each having a playback time of 1 minute, and then combining only selected segments, say 3 segments out of the 30 segments, based on the predetermined configurable rules. As an example, the predetermined configurable rules that are considered for creating the highlight may include, without limit, genre of the selected multimedia content, a standard template for creating the highlight, frequency of access of the selected multimedia content recordings, pause points in the selected multimedia content recordings, user preference and bookmarks within the selected multimedia content recordings.

In some embodiments, the personalized playlist generator identifies and prioritizes one or more multimedia content recordings, from which the highlights may be generated based on the interests and other profile information stored in a viewership profile and/or user profile of the user. Further, the present disclosure discloses a method for generating a playlist of the highlights of the selected one or more multimedia content recordings. In some embodiments, the highlights of each of the selected one or more multimedia content recordings corresponds to one of the selected one or more multimedia content recordings and provides a simple preview of the multimedia content recording.

In some embodiments, the present disclosure also discloses personalization of the playlist of highlights based on the information in the user profile. As an example, the user profile may comprise information related to viewing preferences of the user, viewing patterns of the user, content bookmarks created by the user, favorite multimedia genres of the user, multimedia content recording last viewed by the user, duration of the multimedia content recording last viewed, and information related to one or more electronic devices used by the user for viewing the multimedia content recordings. Further, the highlights are ordered and provided to the user based on the information in the user profile.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

**FIG**. **1** shows an exemplary environment for generating personalized playlist of highlights of plurality of multimedia content recordings in accordance with some embodiments of the present disclosure.

Accordingly, the environment **100** comprises a personalized playlist generator **101** for generating a personalized playlist **109** of highlights of multimedia content recordings **105.** In some embodiments, the multimedia content recordings **105** may be recorded and stored in a multimedia content recording unit **103** associated with the user. As an example, the multimedia content recording unit **103** may be a Set Top Box (STB) or Set Top Unit (STU) associated with a television, which may be configured to record and store the multimedia content **105** being telecasted in the TV. The STB may store the recorded multimedia content recordings **105** on a Hard Disk Drive (HDD) embedded within the STB. Alternatively, the multimedia content recording unit **103** may also store the multimedia content recordings **105** on a Universal Serial Bus (USB) storage unit or a cloud storage unit associated with the multimedia content recording unit **103.**

In some embodiments, the personalized playlist generator **101** selects one or more multimedia content recordings **105A** from the plurality of multimedia content recordings **105** based on one or more parameters associated with the user profile **106.** As an example, the one or more parameters associated with the user profile **106** may comprise, without limit, viewing preferences of the user, viewing patterns of the user, content bookmarks created by the user, favorite multimedia genres of the user, multimedia content recordings last viewed by the user, duration of the multimedia content recordings last viewed, and information related to one or more electronic devices used by the user for viewing the multimedia content. Upon selecting the one or more multimedia content recordings **105A,** the personalized playlist generator **101** creates a highlight of each of the selected multimedia content recordings **105A** using predetermined configurable rules **107.** As an example, the predetermined configurable rules **107** may comprise, without limit, the genres of the selected multimedia content recordings **105A,** a standard template for creating the highlight, frequency of access of the genres of the selected multimedia content recordings **105A,** pause points in the selected multimedia content recordings **105A,** user preference in watching the selected multimedia content recordings **105A** of similar genres, bookmarks on the selected multimedia content recordings **105A,** presence of content markers in the selected multimedia content recordings **105A,** and presence of Increased Digital Resolution (IDR) frames within the selected multimedia content recordings **105A.**

In some embodiments, the personalized playlist generator **101** creates the playlist of the highlights of each of the selected multimedia content recordings **105A** based on the one or more parameters associated with the user profile **106.** The personalized playlist **109** is a list of the highlights of the selected multimedia content recordings **105A** which may be provided to the user through an electronic device associated with the user.

**FIG**. **2** shows a detailed block diagram illustrating a personalized playlist generator for generating personalized playlist of highlights of multimedia content recordings in accordance with some embodiments of the present disclosure.

The personalized playlist generator **101** comprises an I/O interface **201,** a processor **203,** and a memory **205.** The I/O interface **201** may be configured to access the plurality of multimedia content recordings **105** which are recorded and stored in the multimedia content recording unit **103.** The memory **205** may be communicatively coupled to the processor **203.** The processor **203** may be configured to perform one or more functions of the personalized playlist generator **101** for generating the personalized playlist **109** of the highlights of the multimedia content recordings **105.** In one implementation, the personalized playlist generator **101** comprises data **206** and modules **207** for performing various operations in accordance with the embodiments of the present disclosure. In an embodiment, the data **206** may be stored within the memory **205** and may include, without limit, user profile **106,** predetermined configurable rules **107,** and other data **209.**

In one embodiment, the data **206** may be stored within the memory **205** in the form of various data structures. Additionally, the data **206** may be organized using data models, such as relational or hierarchical data models. The other data **209** may store data, including temporary data and temporary files, generated by modules **207** while generating the personalized playlist **109** of the highlights of the multimedia content recordings **105.**

In some embodiment, the user profile **106** may comprise information related to the interests and convenience of the user in viewing the multimedia content recordings **105.** One or more parameters associated with the user profile **106** may include, without limit, viewing preference of the user, viewing pattern of the user, content bookmarks created by the user, favorite multimedia genres of the user, multimedia content recordings last viewed by the user, duration of the multimedia content recordings last viewed by the user, and information related to one or more electronic devices used by the user for viewing the multimedia content recordings. In an implementation, the user profile **106** may be stored in the multimedia content recording unit **103** and may be dynamically retrieved by the personalized playlist generator **101** while generating the personalized playlist **109** for the user.

As an example, the viewing preference of the user includes details related to language preferences of the user. The viewing pattern comprises information related to time of day in which the user views the multimedia content recordings **105.** The content bookmarks are the trace points in the multimedia content recordings **105,** which are reference points from which the user can resume a previous instance of playing the multimedia content recordings **105.** The content bookmarks may be static or dynamic. A static bookmark is created by the user. A dynamic bookmark is automatically created when there is an abrupt end to a playing instance of the multimedia content recordings **105.** The favorite multimedia genre of the user includes one or more multimedia genres which are most preferred and/or liked by the user. As an example, various multimedia genre includes, without limiting to, Fiction, Comedy, Drama, Horror, Non-fiction, Realistic fiction, Romance, Satire etc.

In some embodiments, the predetermined configurable rules **107** are used by the personalized playlist generator **101** while creating the highlights of the selected multimedia content recordings **105A.** The predetermined configurable rules **107** are derived from standard policies and rules that govern the telecast and viewing of various multimedia content. As an example, the predetermined configurable rules **107** may comprise, without limiting to, genre of the selected multimedia content recordings **105A,** a standard template for creating the highlight, frequency of access of the genre of the selected multimedia content recordings **105A,** pause points in the selected multimedia content recordings **105A,** user preference in watching the selected one multimedia content recordings **105A** of similar genre, bookmarks on the selected multimedia content recordings **105A,** presence of content markers in the selected multimedia content recordings **105A** and presence of Increased Digital Resolution (IDR) frames within the selected multimedia content recordings **105A.** In an implementation, the predetermined configurable rules **107** may be stored in a rules database associated with the personalized playlist generator **101.** In another implementation, the predetermined configurable rules **107** may be obtained from an external system/storage unit.

In some embodiment, the data **206** may be processed by one or more modules **207** in the personalized playlist generator **101.** In one implementation, the one or more modules **207** may be stored as a part of the processor **203.** In another implementation, the one or more modules **207** may be communicatively coupled to the processor **203** for performing one or more functions of the personalized playlist generator **101.** The modules **207** may include, without limit, a scoring module **211,** a highlight creation module **213,** a personalized playlist creation module **215** and other modules **217.**

As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality. In an embodiment, the other modules **217** may be used to perform various miscellaneous functionalities of the personalized playlist generator **101.** It will be appreciated that such modules **207** may be represented as a single module or a combination of different modules.

The scoring module **211** may be responsible for assigning a relative score to each of the multimedia content recordings **105** based on one or more parameters associated with the user profile **106.** Further, upon assigning the relative scores, the scoring module **211** selects one or more recorded multimedia content **105A** from the multimedia content recordings **105** based on the relative score of each of the multimedia content recordings **105.** In some embodiments, the scoring module **211** may use the predetermined configuration rules for selecting the multimedia content recordings **105A** for creating the highlights based on the one or more parameters associated with the user profile **106.** Further, the scoring module **211** may process through the multimedia content recordings **105** to select the multimedia content recordings **105A.**

In some embodiments, the multimedia content recording **105A** having a relative score greater than a predetermined configurable threshold score among the multimedia content recordings **105** is selected for creating the highlight. As an example, the predetermined configurable threshold score may be '7' on a scale of 10. Which means that, each of the selected multimedia content recordings **105A,** having a relative score of more than '7' are selected for creating the highlights. The mechanism of assigning the relative scores to the multimedia content recording **105** and selecting the one or more recorded multimedia content **105A** from the multimedia content recordings **105** based on their relative scores is explained in detail with the help of **FIG**. **3** in the further section of the disclosure.

The highlight creation module **213** may be responsible for creating the highlight of each of the selected multimedia content recordings **105A** based on the predetermined configurable rules **107.** In an embodiment, the highlight creation module **213** comprises identifying one or more segments of the multimedia content in each of the selected multimedia content recordings **105A.** Upon identifying the one or more segments, the highlight creation module **213** assigns a relative segment score to each of the one or more segments of the multimedia content based on the one or more parameters associated with the user profile **106.** As an example, the one or more segments of the multimedia content may be identified by splitting the entire multimedia content into multiple parts having equal runtime or playback time, say a playback time of 1 minute. Further, the highlight creation module **213** combines the one or more segments of the multimedia content based on the relative segment score to create the highlight of each of the selected multimedia content recordings **105A.**

The personalized playlist creation module **215** may be responsible for ordering the highlight of each of the selected multimedia content recordings **105A** based on the user profile **106,** thereby generating a personalized playlist **109** of the highlight of each of the selected multimedia content recordings **105A.** Further, the personalized playlist creation module **215** may also be responsible for providing the personalized playlist **109** to the user through the one or more electronic devices associated with the user.

In some embodiments, each of the highlights comprised in the personalized playlist **109** of highlights may be a link, such as Universal Resource Locators (URLs), to a corresponding recorded multimedia content of the plurality of recorded multimedia content **105** in its original state, from which the highlight has been created. Further, the personalized playlist creation module **215** may dynamically update the personalized playlist **109** of the highlights based on the one or more parameters associated with the user profile **106.** For example, the viewing pattern of the user may change over a certain period due to changes in the routine of the user or due to a busy schedule of the user. In such scenarios, the personalized playlist creation module **215** identifies and considers the changes in the viewing pattern of the user and accordingly updates the personalized playlist **109** of highlights to keep the personalized highlights in-line with the interests and requirements of the user.

In some embodiments, upon providing the personalized playlist **109** of highlights to the user, the user may browse through the personalized playlist **109** of highlights and may select one of the one or more highlights in the playlist for playback or viewing. Then, the personalized playlist generator **101** may provide an option to the user to either playback the selected highlight alone or to playback the entire recorded multimedia content corresponding to the selected highlight. If the user chooses to play the highlight, then the selected highlight may be streamed to the user through a highlight streaming server (not shown in figures). The highlight streaming server may be responsible for retrieving the appropriate highlight and presenting it to the user.

Further, if the user chooses to playback the entire multimedia content recording corresponding to the highlight, then the highlight streaming server interfaces with the multimedia content recording unit **103** to fetch the requested multimedia content recording. In some embodiments, the highlight streaming server may update the status of the viewed multimedia content as "Watched & accessed", indicating that the recorded multimedia content has been accessed and viewed by the user. On the other hand, if only the highlight was viewed, then the status may be updated as "Watched". Finally, the status of each multimedia content recordings **105** may be considered as a parameter to dynamically build a improvised user profile **106.**

**FIG**. **3** shows an illustration of generating personalized playlist of highlights of recorded multimedia content in accordance with an exemplary embodiment of the present disclosure.

Consider a user 'ABC', who uses a STB for subscribing one or more television channels/services from one of a third-party digital television service provider. The STB may be capable of recording and storing the plurality of recorded multimedia content **301a** being telecasted in the one or more channels/services. In an implementation, the personalized playlist generator **101** disclosed in the instant disclosure may be integrated with the STB associated with the user 'ABC' to generate and provide a personalized playlist **302** of the plurality of recorded multimedia content **301a,** recorded by the STB, to the user 'ABC'.

As an example, the list **301** in **FIG**. **3** indicates a list of the multimedia content recordings **105** that are recorded and stored in the STB associated with the user. Each of the multimedia content recordings **301a** may have different multimedia content characteristics, i.e. genre **301b,** language **301c,** run time (playback time) **301d** and file size **301e.** For example, as indicated in the list **301,** one of the multimedia content recordings **301a** is a literature oriented show - 'The Winds of Summer', which is in English and has a total playback time **301d** of 68 minutes, having a file size **301e** of 560 MB when recorded and stored. Similarly, the plurality of recorded multimedia content **301a** include various other television shows belonging to various genres **301b** and language **301c** of telecast, as indicated in the list **301.**

The user profile **106** of the user 'ABC' may comprise various information related to the user 'ABC'. As an example, the user profile **106** may include language **301c** preferences of the user and favorite multimedia genre **301b** of the user. In the instant example, the languages **301c** preferred by the user 'ABC' may be 'Hindi' and 'English'. Similarly, the favorite genre **301b** of the user may be 'Sports' and 'Fiction', as indicated in **FIG**. **3****.**

Now, the scoring module **211** in the personalized playlist generator **101** assigns a relative score to each of the multimedia content recordings **301a** in the list **301** to select one or more recorded multimedia content **302a** among the plurality of recorded multimedia content **301a** for creating the highlights. The relative score may be assigned based on the information stored in the user profile **106** of the user 'ABC'. Accordingly, the multimedia content recordings **301a** that closely match with the parameters in the user profile **106** may be assigned a higher relative score when compared to the other multimedia content. Table A below indicates exemplary relative scores assigned to each of the multimedia content recordings **301a** based on the information in the user profile **106**

**Table A: Relative score of the plurality of recorded multimedia content**

| **Recorded multimedia content 301a** | | **Relative score (Out of 10)** |
|---|---|---|
| 1. | The winds of Summer | 5 |
| 2. | American Idol | 5 |
| 3. | Sports Center | 9 |
| 4. | T-20 Cricket match | 9 |
| 5. | Ra. One | 8 |
| 6. | Science of Stupid | 4 |

Here, the multimedia content recordings **301a,** 'Sports Center' (belonging to 'Sports' genre **301b** and telecasted in 'English') and 'T-20 Cricket match' (belonging to 'Sports' genre **301b** and telecasted in either 'English' or 'Hindi') have been assigned a highest relative score of '9', since the user profile **106** of 'ABC' indicates that the user 'ABC' has more interest in 'Sports' related multimedia content and also that the preferred languages **301c** of the user 'ABC' are 'English' and 'Hindi'. Similarly, the multimedia content **301a** 'Ra. One' (belonging to 'Fiction' genre **301b** and telecasted in 'Hindi') is assigned a relative score of 8 since the user profile **106** indicates that the user is interested in viewing 'Fiction' related multimedia content **301a,** which is prioritized next to the 'Sports' related multimedia content. Further, the recorded multimedia content **301a -** 'The World of Summer' (belonging to 'Literature' genre **301b** and telecasted in 'English'), 'American Idol' (belonging to 'Music' genre **301b** and telecasted in 'English') and 'Science of Stupid' (belonging to 'Science' genre **301b** and telecasted in 'Hindi') are assigned a lower relative score since they do not belong to the favorite multimedia content genre **301b** of the user 'ABC'.

Now, upon assigning the relative scores to each of the multimedia content recordings **301a,** the personalized playlist generator **101** selects the one or more recorded multimedia content **302a** from the multimedia content recordings **301a** for creating highlights based on their respective relative scores. As an example, the selected multimedia content recordings **302a** having the relative score higher than '7' may be selected for creating the individual highlights. **Table B** indicates the multimedia content recordings **302a** selected for creating the highlights among the multimedia content recordings **301a** indicated in **Table A.**

**Table B: List of selected recorded multimedia content.**

| **Selected recorded multimedia content 302a** | | **Relative score (Out of 10)** |
|---|---|---|
| 1. | Sports Center | 9 |
| 2. | T-20 Cricket match | 9 |
| 3. | Ra. One | 8 |

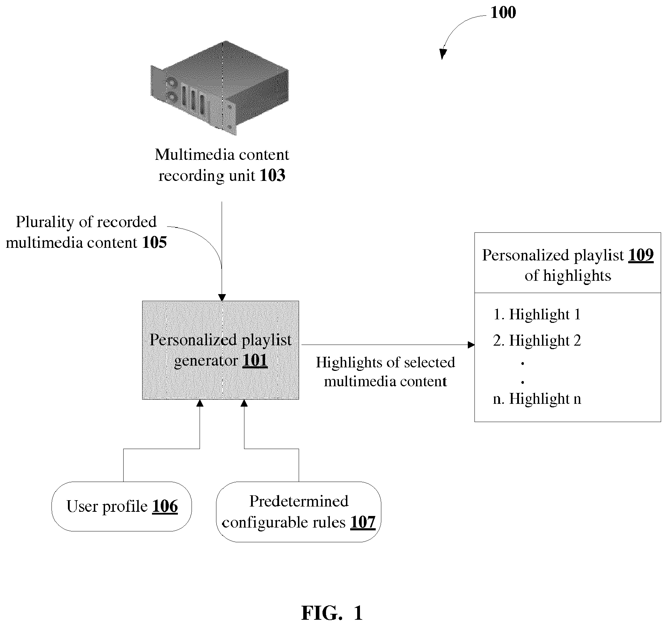

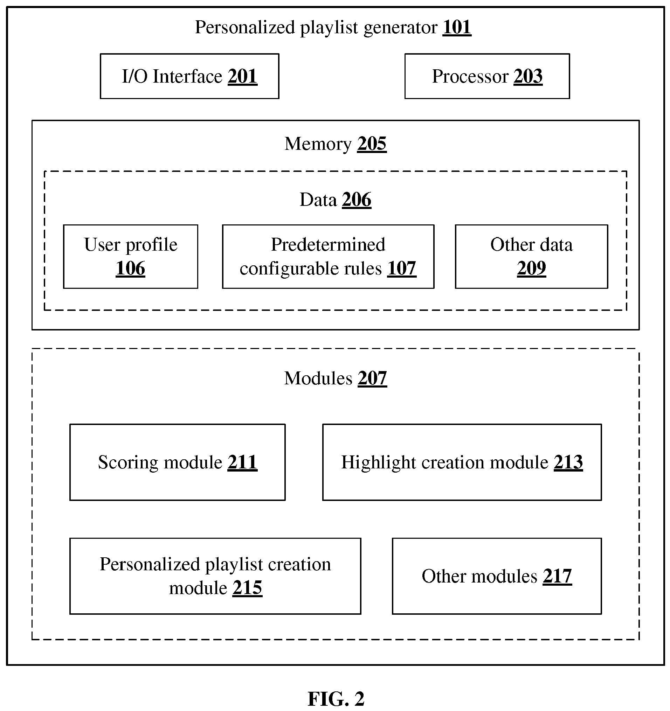

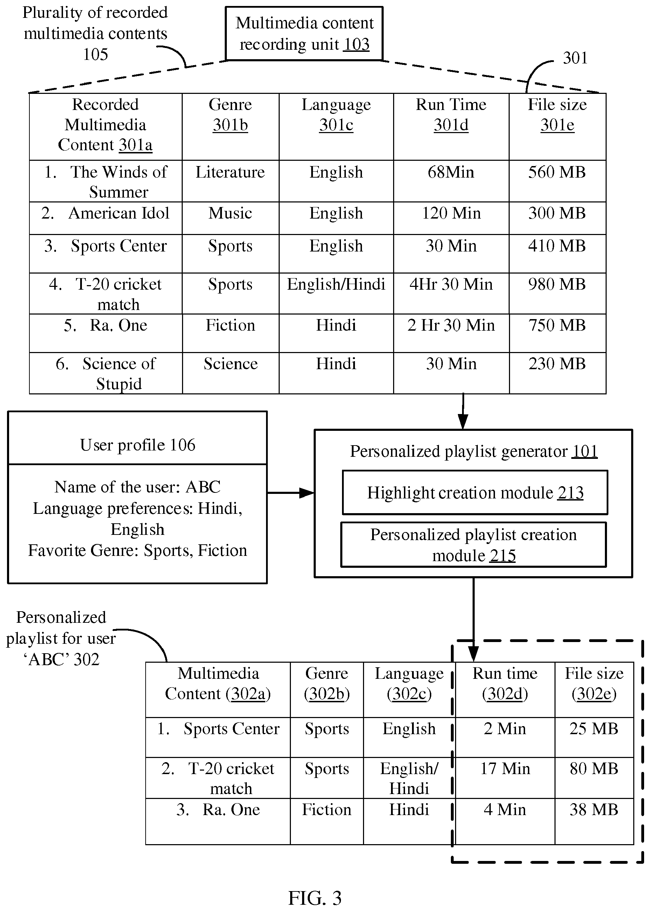

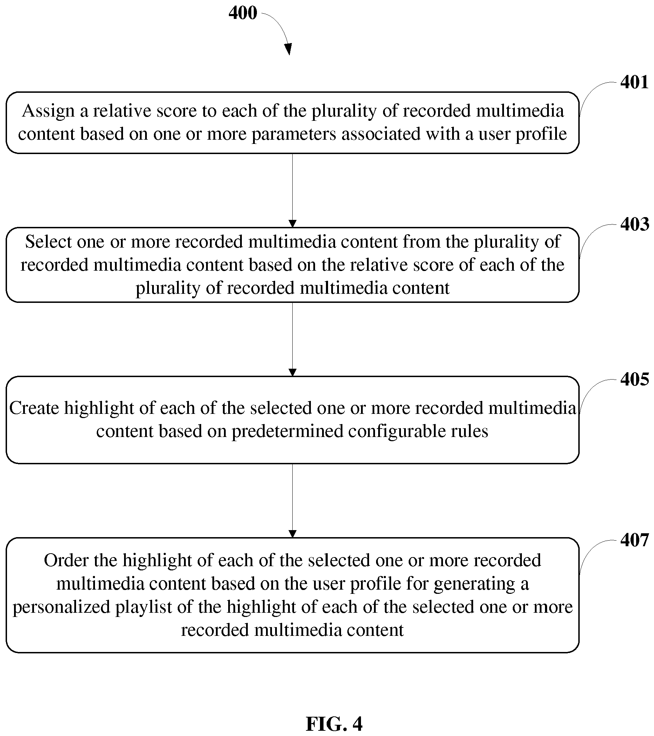

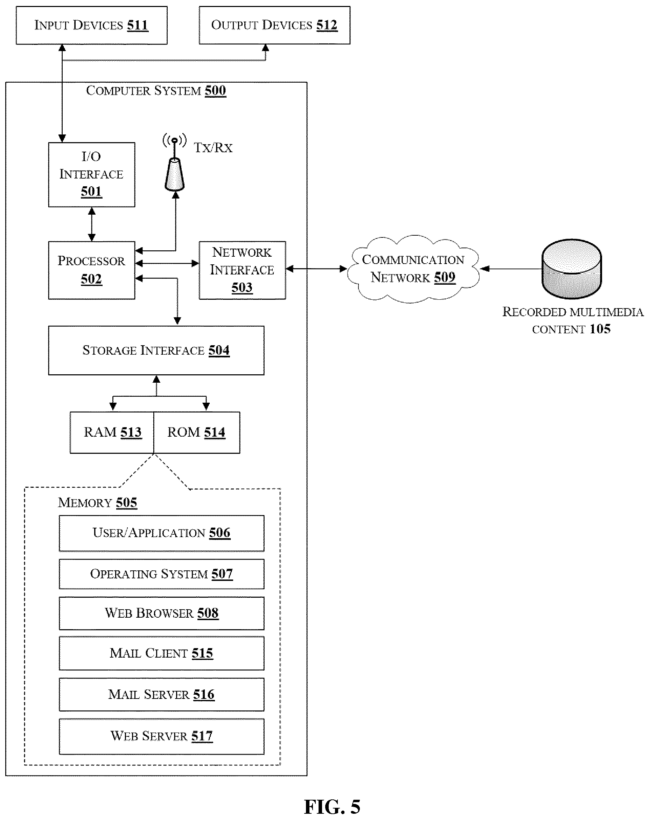

After selecting the multimedia content recordings **302a** from the multimedia content recordings **301a,** the personalized playlist generator **101** uses the one or more predetermined configurable rules **107** (not shown in FIG. 3) for creating the highlights of each of the selected multimedia content recordings **302a.** Initially, the personalized playlist generator **101,** using the highlight creation module **213,** identifies one or more segments of the multimedia content in each of the selected multimedia content recordings **302a.** Later, the highlight creation module **213** assigns a relative segment score to each of the one or more segments of the multimedia content based on the one or more parameters associated with the user profile **106.** Finally, the one or more segments of the multimedia content are combined based on the relative segment score assigned to each of the multimedia content to create the highlight of each of the selected multimedia content recordings **302a.** Once the highlights have been created, the personalized playlist creation module **215** orders the highlight of each of the selected multimedia content recordings **302a** based on information in the user profile **106** for generating the playlist of the one or more highlights. Finally, the generated playlist may be presented to the user as indicated in **FIG**. **3****.**

In some embodiments, each entry of highlights in the personalized playlist **302** may be linked with the multimedia content recordings **302a** from which the highlight has been created. Hence, when the user selects one of the one or more highlights in the personalized playlist **302,** the user may be either directed for a playback of the entire recorded multimedia content **301a** associated with the selected highlight or only the selected highlight may be played depending on the nature of request by the user. As an example, when the user selects the multimedia content **302a** 'Sports Center' from the personalized playlist **302** provided to him, the personalized playlist generator **101** may prompt the user to select to play either the highlight of the 'Sports Center' event which has a total playback time **302d** of 2 minutes or to play the entire multimedia content recording **301a** corresponding to the 'Sports Center' event, which has a total playback time **301d** of 30 minutes.

Further, as indicated in the encircled portion of the list **302,** it may be noted that the total playback time **302d** and the file size **302e** of the one or more highlights in the personalized playlist **302** are greatly reduced as compared to the total playback time **301d** and the file size **301e** of the corresponding multimedia content recording **301a.** Hence, the personalized playlist generator **101** relieves the user from the burden of having to go through the entire list of the multimedia content recordings **301a** and then the need for viewing the multimedia content recordings **301a** for their entire playback time **301d,** thereby enhancing the user convenience in managing the multimedia content recordings **301a.**

**FIG**. **4** shows a flowchart illustrating a method for generating personalized playlist of highlights of recorded multimedia content in accordance with some embodiments of the present disclosure.

As illustrated in **FIG**. **4****,** the method **400** comprises one or more blocks for generating personalized playlist **109** of highlights of plurality of recorded multimedia content **105** using a personalized playlist generator **101.** The method **400** may be described in the general context of computer executable instructions. Generally, computer executable instructions can include routines, programs, objects, components, data structures, procedures, modules, and functions, which perform specific functions or implement abstract data types.

The order in which the method **400** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 401,** the personalized playlist generator **101** assigns a relative score to each of the multimedia content recordings **105** based on one or more parameters associated with a user profile **106.** As an example, the one or more parameters associated with the user profile **106** may comprise viewing preference of the user, viewing pattern of the user, content bookmarks created by the user, favorite multimedia genre of the user, multimedia content recording last viewed by the user, duration of the last viewed multimedia content recording, and information related to one or more electronic devices used by the user for viewing the multimedia content.

At **block 403,** the personalized playlist generator **101** selects one or more recorded multimedia content **105A** from the multimedia content recordings **105** based on the relative score of each of the multimedia content recordings **105.** In an embodiment, the selected multimedia content recordings **105A** having a relative score greater than a predetermined configurable threshold score among the multimedia content recordings **105** is selected for creating the highlight.

At **block 405,** the personalized playlist generator **101** creates highlight of each of the selected multimedia content recordings **105A** based on predetermined configurable rules **107.** As an example, the predetermined configurable rules **107** comprises genre of the selected multimedia content recordings **105A,** a standard template for creating the highlight, frequency of access of the genre of the selected multimedia content recordings **105A,** pause points in the selected multimedia content recordings **105A,** user preference in watching the selected multimedia content recordings **105A** of similar genre, bookmarks on the selected multimedia content recordings **105A,** presence of content markers in the selected multimedia content recordings **105A** and presence of Increased Digital Resolution (IDR) frames within the selected multimedia content recordings **105A.** In some implementation, the predetermined configurable rules **107** may be stored in a rules database associated with the personalized playlist generator **101.**

In an embodiment, creating the highlight of each of the selected multimedia content recordings **105A** further comprises identifying one or more segments of multimedia content in each of the selected multimedia content recordings **105A.** Upon identifying the one or more segments, a relative segment score may be assigned to each of the one or more segments of the multimedia content based on the one or more parameters associated with the user profile **106.** Then, the one or more segments of the multimedia content may be combined based on the relative segment score to create the highlight of each of the selected multimedia content recordings **105A.**

At **block 407,** the personalized playlist generator **101** orders the highlight of each of the selected multimedia content recordings **105A** based on the user profile **106** for generating a personalized playlist **109** of the highlight of each of the selected multimedia content recordings **105A.** In some embodiments, the personalized playlist generator **101** further comprises dynamically updating the personalized playlist **109** of the highlights based on the one or more parameters associated with the user profile **106.** Also, the personalized playlist **109** may be provided to the user through the one or more electronic devices.

### Computer System

**FIG**. **5** illustrates a block diagram of an exemplary computer system **500** for implementing embodiments consistent with the present disclosure. In an embodiment, the computer system **500** may be the personalized playlist generator **101** which is used for generating the personalized playlist **109** of highlights of the plurality of recorded multimedia content **105.** The computer system **500** may comprise a central processing unit ("CPU" or "processor") **502.** The processor **502** may comprise at least one data processor for executing program components for executing user- or system-generated business processes. A user may include a person, a person using a device such as such as those included in this invention, or such a device itself. The processor **502** may include specialized processing units such as integrated system (bus) controllers, memory management control units, floating point units, graphics processing units, digital signal processing units, etc.

The processor **502** may be disposed in communication with one or more input/output (I/O) devices **(511** and **512)** via I/O interface **501.** The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc.

Using the I/O interface **501,** the computer system **500** may communicate with one or more I/O devices **(511** and **512).** In some embodiments, the processor **502** may be disposed in communication with a communication network **509** via a network interface **503.** The network interface **503** may communicate with the communication network **509.** The network interface **503** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc.

Using the network interface **503** and the communication network **509,** the computer system **500** may access the plurality of recorded multimedia content **105.** The communication network **509** can be implemented as one of the different types of networks, such as intranet or Local Area Network (LAN) and such within the organization. The communication network **509** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **509** may include a variety of network devices, including routers, bridges, servers, computing devices, storage devices, etc.

In some embodiments, the processor **502** may be disposed in communication with a memory **505** (e.g., RAM **513,** ROM **514,** etc. as shown in **FIG**. **5****)** via a storage interface **504.** The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user/application data **506,** an operating system **507,** web server **508** etc. In some embodiments, computer system **500** may store user/application data **506,** such as the data, variables, records, etc. as described in this invention. Such databases may be implemented as fault-tolerant, relational, scalable, secure databases such as Oracle or Sybase.

The operating system **507** may facilitate resource management and operation of the computer system **500.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. A user interface may facilitate display, execution, interaction, manipulation, or operation of program components through textual or graphical facilities. For example, user interfaces may provide computer interaction interface elements on a display system operatively connected to the computer system **500,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

In some embodiments, the computer system **500** may implement a web browser **508** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system **500** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **500** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

### Advantages of the embodiment of the present disclosure are illustrated herein.

In an embodiment, the present disclosure provides a method for creating highlights of the plurality of recorded multimedia content.

In an embodiment, the present disclosure provides a method for generating a personalized playlist of the highlight of the plurality of recorded multimedia content based on the interests and viewership profile of the user.

In an embodiment, the method of present disclosure provides a means for selecting appropriate content for a viewer from the plurality of recorded multimedia content using one or more predetermined configurable rules.

In an embodiment, the method of present disclosure helps users in optimal usage of resources, such as Internet and memory resources, since the personalized playlist provided to the user comprises only the highlights of the plurality of recorded multimedia content.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes. The scope of the invention is to be limited only by the claims. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for generating personalized playlist (109) of highlights of multimedia content recordings (105), the method comprising:
assigning, by a personalized playlist generator (101), a relative score to each of the multimedia content recordings (105) based on one or more parameters associated with a user profile (106);
selecting, by the personalized playlist generator (101), one or more multimedia content recordings (105A) from the multimedia content recordings (105) based on the relative score of each of the multimedia content recordings (105);
creating, by the personalized playlist generator (101), highlight of each of the selected multimedia content recordings (105A) based on predetermined configurable rules (107); and
ordering, by the personalized playlist generator (101), the highlight of each of the selected multimedia content recordings (105A) based on the user profile (106) for generating a personalized playlist (109) of the highlight of each of the selected multimedia content recordings (105A).

2. The method as claimed in claim 1, wherein the selected multimedia content recordings (105A) having a relative score greater than a predetermined configurable threshold score among the multimedia content recordings (105) is selected for creating the highlight.

3. The method as claimed in claim 1 or 2, wherein creating the highlight of each of the selected multimedia content recordings (105A) further comprises:
identifying one or more segments of multimedia content in each of the selected multimedia content recordings (105A);
assigning a relative segment score to each of the one or more segments of the multimedia content based on the one or more parameters associated with the user profile (106); and
combining the one or more segments of the multimedia content based on the relative segment score to create the highlight of each of the selected multimedia content recordings (105A).

4. The method as claimed in claim 1, 2, or 3, wherein the predetermined configurable rules (107) comprises genre of the selected multimedia content recordings (105A), a standard template for creating the highlight, frequency of access of the genre of the selected multimedia content recordings (105A), pause points in the selected multimedia content recordings (105A), user preference in watching the selected multimedia content recordings (105A) of similar genre, bookmarks on the selected multimedia content recordings (105A), presence of content markers in the selected multimedia content recordings (105A) and presence of Increased Digital Resolution (IDR) frames within the selected multimedia content recordings (105A).

5. The method as claimed in any preceding claim, wherein the predetermined configurable rules (107) are stored in a rules database associated with the personalized playlist generator (101).

6. The method as claimed in any preceding claim, wherein the one or more parameters associated with the user profile (106) comprises viewing preference of the user, viewing pattern of the user, content bookmarks created by the user, favorite multimedia genre of the user, recorded multimedia content last viewed by the user, duration of the recorded multimedia content last viewed, and information related to one or more electronic devices used by the user for viewing the multimedia content.

7. The method as claimed in any preceding claim, further comprising dynamically updating the personalized playlist (109) of the highlights based on the one or more parameters associated with the user profile (106).

8. The method as claimed in any preceding claim, further comprising providing the personalized playlist (109) to the user through the one or more electronic devices.

9. A personalized playlist generator (101) for generating personalized playlist (109) of highlights of plurality of recorded multimedia content (105), the personalized playlist generator (101) comprising:
a processor (203); and
a memory (205), communicatively coupled to the processor (203), wherein the memory (205) stores processor-executable instructions, which, on execution, causes the processor (203) to perform the method of any preceding claim.
